# EUROPEAN PATENT SPECIFICATION

(11) **EP 3 488 984 B1**
(45) Date of publication and mention of the grant of the patent: **02.12.2026**
(21) Application number: 18201433.2
(22) Date of filing: 19.10.2018
(51) Int. Cl.: B27M 1/08, B23Q 1/01, B23Q 11/00, B27G 21/00

(54) **MACHINE FOR WORKING WORKPIECES, MADE OF WOOD AND THE LIKE, PROVIDED WITH A SYSTEM FOR DETECTING THE PRESENCE OF AN OPERATOR, AND OPERATION METHOD THEREOF**
BEARBEITUNGSMASCHINE FÜR WERKSTÜCKE AUS HOLZ ODER ÄHNLICHE MIT EINEM BENUTZERSDETEKTIONSYSTEM UND VERWENDUNGSMETHODE
MACHINE POUR L'USINAGE DE PIÈCES FAITES DE BOIS OU EQUIVALENT ET EQUIPEES D'UN SYSTEME DE DETECTION DE PRESENCE D'UN OPERATEUR, ET METHODE D'UTILISATION

(30) Priority: 24.11.2017 IT 201700135333
(43) Date of publication of application: 29.05.2019
(73) Proprietor: SCM Group S.p.A., 47921 Rimini (RN) (IT)
(72) Inventor: MAZZA, Michele, 47921 Rimini (IT); MANTEGA, Claudio, 47921 Rimini (IT)
(74) Representative: Santi, Filippo

(56) References cited:
- EP-A1- 2 253 412
- EP-A1- 2 253 417
- EP-A1- 2 628 993
- EP-A2- 0 993 903
- EP-A2- 1 837 189
- EP-B1- 1 893 512
- EP-B1- 3 104 998
- WO-A1-2015/185351
- WO-A1-2015/185351
- WO-A1-2017/103811
- WO-A1-2017/103812
- DE-A1- 102007 041 097
- DE-A1- 102015 215 211
- DE-U1- 202015 004 517
- DE-U1- 202016 100 532
- ES-T3- 2 617 620
- IT-A1- MI20 120 213
- US-A1- 2012 022 689
- US-A1- 2019 022 811

## Description

This invention relates to a machine for working workpieces, made of wood and the like,
according to the preamble of claim 1, and to an operation method of such a machine according to the preamble of claim 13.

Such a machine and such an operation method are known from the document EP 2 253 417 A1.

The invention also relates to a method for operation of the machine.

More in detail, the invention relates to a machine of the said type, designed and manufactured in particular for working workpieces made of wood, plastic, metal, fibreglass, glass and the like, provided with a system for the detection of the presence of an operator, in a predetermined zone close to the machine.

The machine according to the invention is provided with a working surface for supporting workpieces to be processed, a unit for processing said panels covered by a mobile carriage or cover casing, and a system for the detection of the presence of an operator in a predetermined zone close to the machine.

The description below relates to a machine for working workpieces made of wood provided with a system for detecting the presence of an operator in the zone covered by the mobile carriage during operation of the machine, but it is quite apparent how the same should not be considered limited to this specific use.

As is well known, there are currently machines for working workpieces made of wood comprising systems for detecting the presence of an operator.

More specifically, some safety systems of the on-off type, that is to say, which cause the complete stop of the operation of the machine, comprise photoelectric barriers installed on the machines, associated on board the machine rendered sensitive by the use of contact sensors.

The photoelectric barriers detect the access of an operator in a predetermined zone, considered a risk for the safety of the operator, and send control signals to the central control unit of the machine which determines a slowing down of the machine to a reduced speed, considered not to be hazardous in the case of impact with the operator.

The contact sensors, when they enter into contact with the operator, send control signals to the control unit of the machine which interrupt the operation.

This disadvantage of these machines is that the area covered by photoelectric barriers is therefore over-sized.

Moreover, the sensitive edges foresee the contact with the operator and typically determine the immediate stopping of the machine in an emergency, so the restarting of the operation of the machine requires a considerable waste of time.

Other systems of known machines comprises mats provided with sensors, which can be located on predetermined portions of the base, which delimit non-accessible zones close to the machine. If the operator crossed these zones by mistake the machine would immediately stop working.

As it is evident, the disadvantages of these systems are due to the fact that these mats are easily subject to wear, are difficult in terms of maintenance, and are also of the on-off type.

Further systems of known machines comprise devices such as bumpers designed to contain the hazardous thrusts in the case of impact with the operator, provided inside with pressure sensors which, when they enter into contact with the operator, send control signals to the control unit of the machine which interrupt the operation.

The disadvantage of these devices is due to the fact that contact and impact with the operator is necessary and, moreover, the machine can only move at a reduced speed, considered not to be hazardous in the case of impact, and not at the maximum possible speed and the bumpers must be sufficiently large in order to cover as much surface area as possible of the mobile carriage of the machine. Moreover, these systems are also of the *on-off* type.

As well as the disadvantages listed above, further disadvantages of the known machines are due to the fact that the safety systems installed can give rise to false alarms which cause the unjustified stoppage of machine operation.

Since the systems with photoelectric barriers have a very high detection threshold, they can, for example, generate false alarms in the presence of large amounts of dust in the surrounding environment.

On the other hand, the systems with sensitive mats could detect a heavy object located at a height less than that of the mobile transfer carriage.

It is therefore possible in both cases that the system causes the stoppage of the operation of the machine even due to the presence or the accidental passage of other objects close to the detection system.

The relevant prior art includes also the patent applications EP 0993903 A2, EP 2253412 A1, WO 2015/185351 A1, EP 1837189 A2, US 2012/022689 A1, and DE 102007041097 A1.

Furthermore, the relevant prior art includes patent applications EP 2 628 993 A1, ES 2 617 620 T3, WO 2017/103811 A1, WO 2017/103812 A1, and WO 2015/185351 A1.

In light of the above, it is therefore the aim of the invention to provide a machine for working workpieces made of wood which is provided with a system for detecting the presence of the operator which can operate on an adequate area contiguous with the machine, which does not cause the unjustified stoppage of the operation of the machine and which has a detection threshold calibrated for the actual identification of the presence of the operator in a zone at risk.

The specific object of the invention is therefore is a machine for working workpieces made of wood, plastic, metal, fiberglass, glass or the like comprising a base for supporting said workpieces to be worked, a working unit mobile along said supporting base, a detection system, which can be coupled to said mobile working unit, designed to detect the presence of a target in a first predetermined detection zone contiguous to said supporting base, a logic control unit connectable to said detection system, wherein in said logic control unit are stored predetermined threshold parameters of distances of the target from said mobile working unit in said predetermined detection zone, said detection system comprising a first plurality of sensors which detects the distance of the target from said mobile working unit in said predetermined zone and sends said distance values to said logic control unit, and said logic control unit slows down or stops the movement of said mobile working unit after a comparison between said distance values received from said first plurality of sensors and said predetermined threshold parameters.

Further, according to the invention, the detection of said distance values by said first plurality of sensoria occurs in a synchronised fashion for each sensor of said first plurality of sensors.

Again, according to the invention, said detection system comprises a second plurality of sensors which detects the distance of the target from said mobile working unit in a second predetermined detection zone above said supporting base and sends said distance values to said logic control unit.

Preferably, according to the invention, the detection of said distance values by said second plurality of sensoria occurs in a synchronised fashion for each sensor of said second plurality of sensors.

Further, according to the invention, said first plurality of sensors comprises at least a first, a second and a third sensor which are not aligned with each other.

Again, according to the invention, said first plurality of sensors comprises at least a first, a second, a third, a fourth, a fifth and a sixth sensor of which at least three sensors are not all aligned with each other, said first, second and third sensor are aligned with each other along a line at right angles to the sliding axis of said working unit, and said fourth, fifth and sixth sensor are aligned with each other along a line at right angles to the sliding axis of said working unit, parallel to the alignment line of said first, second and third sensor.

Preferably according to the invention, said second plurality of sensors comprises at least a first and a second sensor aligned with each other along a line at right angles to the sliding axis of said working unit.

Further, according to the invention, said working unit has the shape of an inverted "L" comprising a first portion, positioned laterally with respect to said supporting base, and a second portion, connected to said first portion positioned above said supporting base, and said first plurality of sensors is positioned on said first portion for detecting the target in said first detection zone.

Again, according to the invention, said second plurality of sensors is positioned on said second portion of said working unit for detecting the target in said second detection zone.

Preferably, according to the invention, said working unit has the shape of an inverted "U" comprising a first portion, positioned laterally with respect to said working unit, a second portion positioned above said supporting base, and a third portion, opposite said first portion, with respect to said supporting base, connected to said first portion by means of said second portion, and said first plurality of sensors is positioned on said first portion for detecting the target in said first detection zone.

Further, according to the invention, said second plurality of sensors is positioned on said second portion of said working unit for detecting the target in said second detection zone.

Again, according to the invention, said machine may comprise a third plurality of sensors, positioned on said third portion, for detecting the distance of the target from said mobile working units in zone contiguous with said supporting base, on a side opposite to said zone controlled by said first plurality of sensors, and sends said distance values to said logic control unit.

Preferably, according to the invention, said detection system comprises ultrasound sensors.

A further object of the invention is a method of operation of a machine for working workpieces made of wood, plastic, metal, fibreglass, glass and the like of the type comprising a base for supporting said workpieces to be worked, a working unit mobile along said supporting base according to a sliding speed, said method being characterised in that it comprises the following steps:
providing a logic control unit in which can be stored predetermined threshold values of distances of a target from said mobile working unit in a first predetermined detection zone contiguous with said supporting base,
providing a detection system, which can be coupled to said mobile working unit and which can be connected to said logic control unit, for detecting distance values of the target from said working unit in said first detection zone, and for sending said distance values to said logic control unit,
performing by means of said logic control unit a comparison between said distance values received from said detection system, and said predetermined threshold parameters, and
slowing down or stopping said mobile working unit on the basis of the comparison performed during the previous step and on the basis of the sliding speeds of said mobile working unit.

The invention is now described, by way of example and without limiting the scope of the invention, with reference to the accompanying drawings which illustrate preferred embodiments of it, in which:
Figure 1 is a perspective side view of the machine for working workpieces, made of wood and similar, provided with a system for detecting the presence of an operator, according to the invention;
Figure 2 is a perspective side view of a second embodiment of the machine according to the invention;
Figure 3 is a perspective side view of a third embodiment of the machine according to the invention; and
Figure 4 is a perspective side view of a fourth embodiment of the machine according to the invention.

The similar parts will be indicated in the various drawings with the same numerical references.

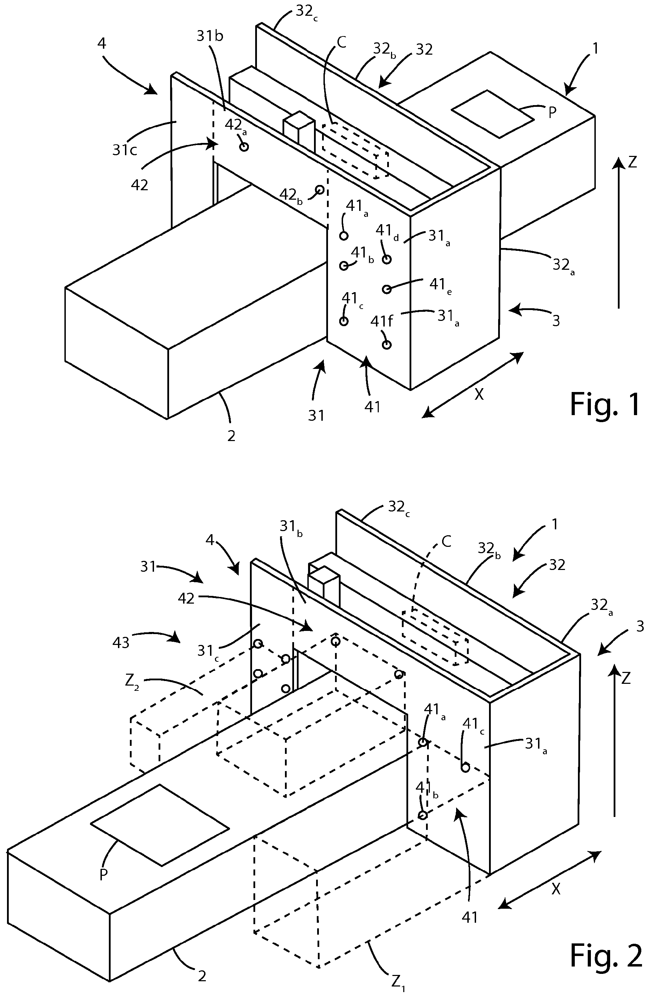

With reference to Figure 1, said machine 1 for working workpieces made of wood, plastic, metal, fibreglass, glass and the like according to the invention comprises a base 2 for supporting said workpieces P to be worked, a working unit 3 mobile along said supporting base 2, a detection system 4 and a logic control unit C.

Said supporting base 2 has an elongate shape according to an axis of extension X and has the length as the predominant dimension.

Said mobile working unit 3 moves along said supporting base 2, in particular along said axis X.

Said mobile working unit 3 is configured for moving in a direction of the axis X and in the opposite direction, on the basis of the program for working the workpiece P contained in said logic control unit C.

Said mobile working unit 3 is provided with an outer surface, or cover casing, having the shape of an inverted "U", also called gantry lever, comprising a first face 31, and a second face 32, opposite to said first face 31, both in the shape of an inverted "U".

Said first face 31 ideally comprises a first portion 31ₐ, or upright, which is adjacent to a side of said supporting base 2, a second portion 31_{b}, or transversal member, which is positioned raised with respect to said supporting base 2, and a third portion 31_{c}, or upright, which is adjacent to the side opposite said supporting base 2 and is connected to said first portion 31ₐ by means of said second portion 31_{b}.

Similarly, said second face 32 also has the same structure as said first face 31, and in particular comprises a first portion 32ₐ, a second portion 32_{b}, and a third portion 32_{c}, respectively opposite to said first portion 31ₐ, second portion 31_{b} and third portion 31_{c} of said first face 31.

Said detection system 4 comprises a plurality of distance sensors, such as, for example, ultrasound sensors which act simultaneously as emitters and receivers, configured for detecting the presence of a target of an operator or of a solid object, by measuring the distance between said target and said mobile working unit 3, in particular the distance from said firs face 31 and/or from said second face 32, in the area covered by said mobile working unit 3 when the latter moves along said supporting base 2, bot in a direction of the axis X and in the opposite direction.

More specifically, said detection system 4 comprises a first plurality of sensors 41 positioned on said first portion 31ₐ of said first face 31 which detects the presence of the operator in an ideal zone Z₁ contiguous with a side of said supporting base 2, covered by said working unit 3 during the movement.

Said zone Z₁ is considered the zone of access by the operator to the machine 1, so it is the zone in which it is most probable that the operator can accidentally enter into contact with said mobile working unit 3.

Said detection system 4 also comprises a second plurality of sensors 42 positioned on said second portion 31_{b} of said first face 31 which detects the presence of the operator in an ideal zone Z₂ above said supporting base 2, covered by said working unit 3 during the movement.

Said detection system 4 can comprise a plurality of sensors which varies on the basis of the level of precision to be obtained.

According to a preferred embodiment of the invention, said detection system comprises a first plurality of sensors 41 and a second plurality of sensors 42.

Said first plurality of sensors 41 comprises a first sensor 41ₐ, a second sensor 41_{b}, a third sensor 41_{c}, a fourth sensor 41_{d}, a fifth sensor 41ₑ, and a sixth sensor 41_{f}, positioned in particular on said first portion 31ₐ, designed for detecting the presence of a target in said zone Z₁, in such a way that, at least three sensors of said first plurality of sensors 41 are not all three aligned with each other.

The expression unaligned sensors means that, considering the sensors as points, whatever plane they are in, these must not all lie on the same line.

Merely by way of example, considering the first sensor 41ₐ, second sensor 41_{b} and fourth sensor 41_{d}, these are not all three aligned with each other, according to the above-mentioned definition.

In particular, said first sensor 41ₐ is positioned on said first face 31 at a predetermined distance from the supporting base 2, according to an axis Z at right angles to said axis X.

Said second sensor 41_{b} is positioned on said first face 31 at a predetermined distance from the supporting base 2, less than the distance of said first sensor 41ₐ, along the axis Z.

Said third sensor 41_{c} is positioned on said first face 31 at a predetermined distance from the supporting base 2, less than the distance of said second sensor 41_{b}, along the axis Z.

Said first sensor 41ₐ, second sensor 41_{b} and third sensor 41_{c} are aligned with each other along said axis Z, however they can also not lie on the same plane as said first face 31.

In fact, said first face 31 can also comprise protrusions and not be completely flat, thus the sensors can also be positioned on different protrusions present on said first face 31. Said fourth sensor 41_{d}, fifth sensor 41ₑ and sixth sensor 41_{f} are positioned on said first face 31, aligned with each other along a line parallel to said axis Z, each positioned according to the distances described, respectively, for said first 41ₐ, second 41_{b} and third sensor 41_{c}.

Said fourth sensor 41_{d}, fifth sensor 41ₑ and sixth sensor 41_{f} can also not lie on the same plane as said first face 31.

Said second plurality of sensors 42 comprises a first sensor 42ₐ and a second sensor 42_{b} positioned on said first face 31, in particular in said second portion 31_{b}, aligned with each other along a line at right angles to the direction of movement X; however, the sensors can also not lie on the same plane as the face 31.

In fact, said second portion 31_{b} of said first face 31 may also comprise protrusions and not be completely flat, thus the sensors can also be positioned on different protrusions present on said second portion 31_{b} of said first face 31.

As shown in Figure 2, according to a second embodiment of the machine 1, a third plurality of sensors 43 can also be positioned on said third portion 31_{c} of said first face 31 which detects the presence of the operator in an ideal zone Z₃ contiguous with the side opposite to the side contiguous with said zone Z₁, of said supporting base 2, covered by said working unit 3 during the movement.

Said third plurality of sensors 43 comprises the same number of sensors as said first plurality of sensors 41, having a mirror-like configuration with respect to the configuration of the sensors of said first plurality of sensors 41.

However, said detection system 4 can be provided with a minimum configuration of sensors, which differs from the preferred embodiment described above, only in that said first plurality of sensors 41 and said third plurality of sensors 43 comprises at least three sensors not aligned with each other, as shown in Figure 2.

Said logic control unit C is operatively connected to said detection system 4, for receiving and processing data coming from said detection system 4, and to the logic control unit of the machine 1, not shown in the drawings.

Without departing from the scope of this invention, said logic control unit C can also not be a unit separate from the general logic control unit of the machine 1, but be included in it, that is to say, the same logic control unit of the machine 1 also performs the functions of the logic control unit C.

The logic control unit C stores predetermined threshold values of distances of a target from said mobile working unit 3 in predetermined detection zones Z₁, Z₂, Z₃, considered secure for the safety of the target, in particular of an operator.

Similarly, said second face 32 may also be provided with sensors configured in an identical fashion to that described above, with the same embodiment variants.

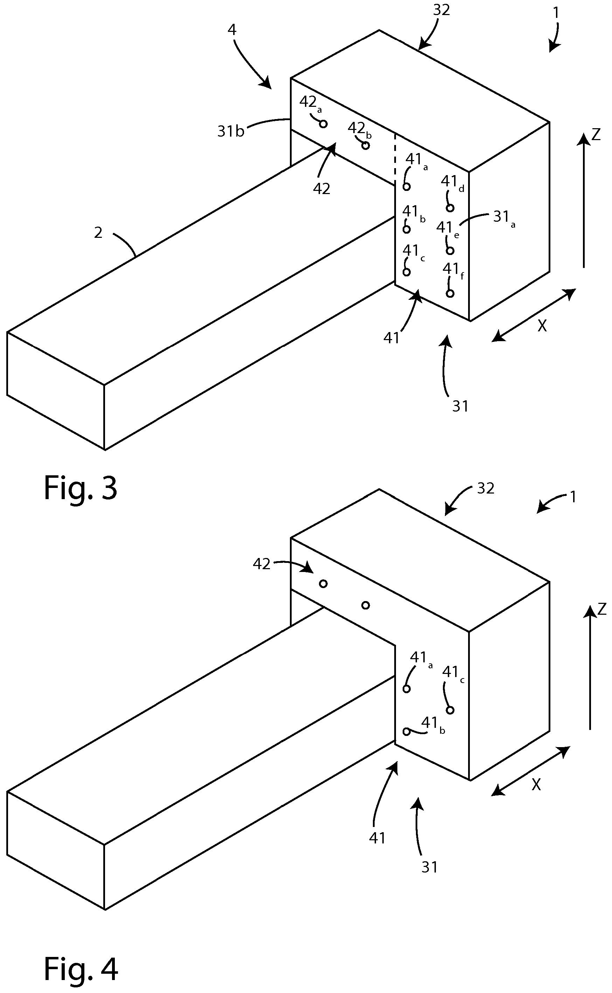

With reference to Figure 3, according to a third embodiment of the invention, said working unit 3 has the shape of an inverted "L", a so-called *cantilever.*

Said third embodiment differs from the first embodiment mainly due to the fact that it comprises a first portion 31ₐ, or upright, and a second portion 31_{b}, or transversal member, connected to said first portion 31ₐ.

For this reason, in said third embodiment, said third portion 31_{c}, or upright, is missing.

According to this third embodiment, said detection system 4 comprises said first plurality of sensors 41 and said second plurality of sensors 42, wherein said first plurality of sensors 41 comprises a plurality of six distance sensors.

Figure 4 shows a fourth embodiment of the machine 1, which differs from the third embodiment due to the fact that said second plurality of sensors 42 comprises a minimum configuration of three distance sensors.

The operation of the machine 1 described above is as follows.

When said machine 1 is in operation, said mobile working unit 3 moves along said supporting base 2, along the direction X, in one direction and in the opposite direction.

Said first plurality of sensors 41 detects the presence of the target, in particular of the operator, in said zone Z₁ and said second plurality of sensors 42 detects the presence of the operator in said zone Z₂.

The sensors of each plurality of sensors are synchronised with each other and emit, and receive, the mechanical sound waves all at the same time.

Moreover, the sensors, forming part of plurality of different sensors, can be synchronised with each other, emitting, and receiving, the mechanical sound waves all at the same time.

When the mechanical sound waves sent strike the target, in particular the operator, they return to the sensors in the form of echoes and each sensor calculates the distance of the operator from it.

According to the invention, each sensor receives the echo of a nearby sensor, thus increasing the detection capacity of said detection system 4.

According to said second and fourth embodiment, the use of at least three sensors, operating in a synchronous fashion and not aligned with each other, allows the detection of the mechanical sound waves reflected by a target provided with surfaces inclined in any manner, which would otherwise not be detected.

Each sensor sends said distance values to said logic control unit C.

Said logic control unit C performs the comparison between said distance values received from said first 41 and/or second plurality of sensors 42 and said predetermined threshold parameters, and, on the basis of the result of said comparison, determines the slowing down or stopping of the movement of said mobile working unit 3.

The slowing down or stopping of said mobile working unit 3, by said logic control unit, depends on the sliding speed of said mobile working unit 3.

More specifically, if said mobile working unit 3 moves at a speed less than a predetermined threshold, for example, at a speed of less than 60 m/min, if a target is detected at a first predetermined distance, for example at 1,500 mm from said working unit 3, this undergoes a slowing down, whilst if the object is detected at a distance less than a second predetermined threshold, for example at 500 mm, said working unit 3 is stopped.

If said working unit 3 moves at a speed greater than said predetermined threshold of 60 m/min, the stopping of the movement of said working unit occurs directly when the object is detected at said first predetermined distance.

The operation of the machine 1 remains unvaried for all the described embodiments of the machine 1, since said logic control unit C processes all the distance values coming from all the pluralities of sensors included in said detection system 4.

As is apparent from the above description, the machine 1 according to the invention allows a detailed detection of the presence of the operator in predetermined zones by means of a detection system which is very simple and easy to use, which allows the operation of the machine not to be completely stopped when an operator is detected in a zone without a high risk.

## Claims

1. Machine (1) for working workpieces (P) made of wood, plastic, metal, fiberglass, glass or the like, comprising
a supporting base (2) of said workpieces (P) to be worked,
a mobile working unit (3) movable along said supporting base (2),
a detection system (4), coupled to said mobile working unit (3), capable to detect the presence of a target in a first predetermined detection zone (Z1) contiguous to said supporting base (2),
a logic control unit (C) connectable to said detection system (4),
wherein predetermined threshold parameters of safety distances of the target from said mobile working unit (3) in said predetermined detection zone (Z1) are stored in said logic control unit (C),
**characterized in that** said detection system (4) comprises a first plurality of sensors (41) which detects the distance of the target from said mobile working unit (3) in said predetermined detection zone (Z1) and sends said distance values to said logic control unit (C),
**in that** said logic control unit (C) is configured to determine whether to slow down or stop the movement of said mobile working unit (3), after a comparison between said distance values received from said first plurality of sensors (41) and said predetermined threshold parameters, and
**in that** the detection of said distance values by said first plurality of sensors (41) takes place in a synchronous mode for each sensor of said first plurality of sensors (41), each sensor of said first plurality of sensors (41) receiving the echo of a nearby sensor, so as to increase the detection of said detection system (4).

2. Machine (1) according to the preceding claim, **characterized in that** said detection system (4) comprises a second plurality of sensors (42) which detects the distance of the target from said mobile working unit (3) in a second predetermined detection zone (Z2) overlying said supporting base (2) and sends said distance values to said logic control unit (C).

3. Machine (1) according to the preceding claim, **characterized in that** the detection of said distance values by said second plurality of sensors (42) takes place in a synchronous mode for each sensor of said second plurality of sensors (42).

4. Machine (1) according to any one of the preceding claims, **characterized in that** said first plurality of sensors (41) comprises at least one first (41a), second (41c) and third sensor (41d) not aligned with each other.

5. Machine (1) according to any one of the claims 1-3, **characterized**
**in that** said first plurality of sensors (41) comprises at least one first (41a), second (41b), third (41c), fourth (41d), fifth (41e), and sixth sensor (41f), of which at least three sensors are not aligned with each other,
**in that** said first (41a), second (41b) and third sensor (41c) are aligned with each other along a straight line orthogonal to the sliding axis of said mobile working unit (3), and
**in that** said fourth (41d), fifth (41e), and sixth sensor (41f) are aligned with each other along a straight line orthogonal to the sliding axis of said mobile working unit (3), parallel to the alignment line of said first (41a), second (41b) and third sensor (41c).

6. Machine (1) according to any one of the claims 2-5, **characterized in that** said second plurality of sensors (42) comprises at least one first (42a) and second sensor (42b) aligned with each other along a straight line orthogonal to the sliding axis of said working unit (3).

7. Machine (1) according to any one of the preceding claims, **characterized**
**in that** said working unit (3) has an inverted L-shape comprising a first portion (31a), arranged laterally with respect to said a supporting base (2), and a second portion (31b), connected to said first portion (31a) and arranged above with respect to said supporting base (2), and
**in that** said first plurality of sensors (41) is arranged on said first portion (31a) for detecting the target in said first detection zone (Z1).

8. Machine (1) according to the preceding claim, when depending on claims 2-6, **characterized in that** said second plurality of sensors (42) is arranged on said second portion (31b) of said working unit (3) for detecting the target in said second detection zone (Z2).

9. Machine (1) according to any one of claims 1-6, **characterized**
**in that** said working unit (3) has an inverted U-shape comprising a first portion (31a), arranged laterally with respect to said supporting base (2), a second portion (31b) arranged above with respect to said supporting base (2), and a third portion (31c), opposite to said first portion (31a), with respect to said supporting base (2), connected to said first portion (31a) by means of said second portion (31b), and
**in that** said first plurality of sensors (41) is arranged on said first portion (31a) for detecting the target in said first detection zone (Z1).

10. Machine (1) according to the preceding claim, when depending on claims 2-6, **characterized in that** said second plurality of sensors (42) is arranged on said second portion (31b) of said working unit (3) for detecting the target in said second detection zone (Z2).

11. Machine (1) according to any one of claims 9 and/or 10, **characterized in that** it comprises a third plurality of sensors (43), arranged on said third portion (31c), for detecting the distance of the target from said mobile working unit (3) in a zone (Z3) contiguous to said supporting base (2), on a side opposite with respect to said zone (Z1) controlled by said first plurality of sensors (41), said third plurality of sensors (43) sending said distance values to said logic control unit (C).

12. Machine (1) according to any one of the preceding claims, **characterized in that** said detection system (4) comprises ultrasonic sensors.

13. Operation method of a machine (1) for working workpieces (P) made of wood, plastic, metal, fiberglass, glass or the like, of the type comprising a supporting base (2) of said workpieces (P) to be worked, a mobile working unit (3) movable along said supporting base (2) according to a sliding velocity, said method comprising
providing a logic control unit (C) in which predetermined threshold parameters of distance of a target from said mobile working unit (3) in a first predetermined detection zone (Z1), contiguous to said supporting base (2), can be stored,
**characterized by**
providing a detection system (4) comprising a first plurality of sensors (41), coupled to said mobile working unit (3) and connectable to said logic control unit (C), for detecting distance values of the target from said working unit (3) in said first predetermined detection zone (Z1), and for sending said distance values to said logic control unit (C),
performing, by means of said logic control unit (C), a comparison between said distance values received from said detection system (4), and said predetermined threshold parameters, and
determining whether to slow down or stop said mobile working unit (3), on the basis of the comparison carried out in the previous step and on the basis of the sliding velocity of said mobile working unit (3),
wherein
the detection of said distance values by said first plurality of sensors (41) takes place in a synchronous mode for each sensor of said first plurality of sensors (41), each sensor of said first plurality of sensors (41) receiving the echo of a nearby sensor, so as to increase the detection of said detection system (4).

## Patentansprüche

1. Maschine (1) zur Bearbeitung von Werkstücken (P) aus Holz, Kunststoff, Metall, Glasfaser, Glas oder dergleichen, umfassend
eine Auflagebasis (2) für die zu bearbeitenden Werkstücke (P),
eine bewegliche Bearbeitungseinheit (3), die entlang der Auflagebasis (2) bewegbar ist,
ein Erfassungssystem (4), das mit der beweglichen Bearbeitungseinheit (3) gekoppelt und dazu ausgebildet ist, das Vorhandensein eines Zielobjekts in einer ersten vorbestimmten Erfassungszone (Z1), die an die Auflagebasis (2) angrenzt, zu erfassen,
eine logische Steuereinheit (C), die mit dem Erfassungssystem (4) verbindbar ist,
wobei in der logischen Steuereinheit (C) vorbestimmte Schwellenwertparameter für Sicherheitsabstände des Zielobjekts von der beweglichen Bearbeitungseinheit (3) in der vorbestimmten Erfassungszone (Z1) gespeichert sind,
**dadurch gekennzeichnet, dass** das Erfassungssystem (4) eine erste Vielzahl von Sensoren (41) umfasst, die den Abstand des Zielobjekts von der beweglichen Bearbeitungseinheit (3) in der vorbestimmten Erfassungszone (Z1) erfassen und die Abstandswerte an die logische Steuereinheit (C) senden,
dass die logische Steuereinheit (C) dazu ausgebildet ist, nach einem Vergleich zwischen den von der ersten Vielzahl von Sensoren (41) empfangenen Abstandswerten und den vorbestimmten Schwellenwertparametern zu bestimmen, ob die Bewegung der beweglichen Bearbeitungseinheit (3) verlangsamt oder gestoppt werden soll, und
dass die Erfassung der Abstandswerte durch die erste Vielzahl von Sensoren (41) für jeden Sensor der ersten Vielzahl von Sensoren (41) in einem synchronen Modus erfolgt, wobei jeder Sensor der ersten Vielzahl von Sensoren (41) das Echo eines benachbarten Sensors empfängt, um die Erfassung durch das Erfassungssystem (4) zu verbessern.

2. Maschine (1) nach dem vorhergehenden Anspruch, **dadurch gekennzeichnet, dass** das Erfassungssystem (4) eine zweite Vielzahl von Sensoren (42) umfasst, die den Abstand des Zielobjekts von der beweglichen Bearbeitungseinheit (3) in einer zweiten vorbestimmten Erfassungszone (Z2), die oberhalb der Auflagebasis (2) liegt, erfassen und die Abstandswerte an die logische Steuereinheit (C) senden.

3. Maschine (1) nach dem vorhergehenden Anspruch, **dadurch gekennzeichnet, dass** die Erfassung der Abstandswerte durch die zweite Vielzahl von Sensoren (42) für jeden Sensor der zweiten Vielzahl von Sensoren (42) in einem synchronen Modus erfolgt.

4. Maschine (1) nach einem der vorhergehenden Ansprüche, **dadurch gekennzeichnet, dass** die erste Vielzahl von Sensoren (41) mindestens einen ersten Sensor (41a), einen zweiten Sensor (41c) und einen dritten Sensor (41d) umfasst, die nicht miteinander fluchten.

5. Maschine (1) nach einem der Ansprüche 1 bis 3, **dadurch gekennzeichnet**
**dass** die erste Vielzahl von Sensoren (41) mindestens einen ersten Sensor (41a), einen zweiten Sensor (41b), einen dritten Sensor (41c), einen vierten Sensor (41d), einen fünften Sensor (41e) und einen sechsten Sensor (41f) umfasst, von denen mindestens drei Sensoren nicht miteinander fluchten,
**dass** der erste Sensor (41a), der zweite Sensor (41b) und der dritte Sensor (41c) entlang einer Geraden miteinander fluchten, die senkrecht zur Verschiebeachse der beweglichen Bearbeitungseinheit (3) verläuft, und
**dass** der vierte Sensor (41d), der fünfte Sensor (41e) und der sechste Sensor (41f) entlang einer Geraden miteinander fluchten, die senkrecht zur Verschiebeachse der beweglichen Bearbeitungseinheit (3) und parallel zur Ausrichtungsgeraden des ersten Sensors (41a), des zweiten Sensors (41b) und des dritten Sensors (41c) verläuft.

6. Maschine (1) nach einem der Ansprüche 2 bis 5, **dadurch gekennzeichnet, dass** die zweite Vielzahl von Sensoren (42) mindestens einen ersten Sensor (42a) und einen zweiten Sensor (42b) umfasst, die entlang einer Geraden miteinander fluchten, die senkrecht zur Verschiebeachse der Bearbeitungseinheit (3) verläuft.

7. Maschine (1) nach einem der vorhergehenden Ansprüche, **dadurch gekennzeichnet**
**dass** die Bearbeitungseinheit (3) eine umgekehrte L-Form aufweist, die einen ersten Abschnitt (31a), der seitlich bezüglich der Auflagebasis (2) angeordnet ist, und einen zweiten Abschnitt (31b) umfasst, der mit dem ersten Abschnitt (31a) verbunden und oberhalb der Auflagebasis (2) angeordnet ist, und
**dass** die erste Vielzahl von Sensoren (41) an dem ersten Abschnitt (31a) angeordnet ist, um das Zielobjekt in der ersten Erfassungszone (Z1) zu erfassen.

8. Maschine (1) nach dem vorhergehenden Anspruch, sofern dieser von einem der Ansprüche 2 bis 6 abhängig ist, **dadurch gekennzeichnet, dass** die zweite Vielzahl von Sensoren (42) an dem zweiten Abschnitt (31b) der Bearbeitungseinheit (3) angeordnet ist, um das Zielobjekt in der zweiten Erfassungszone (Z2) zu erfassen.

9. Maschine (1) nach einem der Ansprüche 1 bis 6, **dadurch gekennzeichnet**
**dass** die Bearbeitungseinheit (3) eine umgekehrte U-Form aufweist, die einen ersten Abschnitt (31a), der seitlich bezüglich der Auflagebasis (2) angeordnet ist, einen zweiten Abschnitt (31b), der oberhalb der Auflagebasis (2) angeordnet ist, und einen dritten Abschnitt (31e) umfasst, der bezüglich der Auflagebasis (2) dem ersten Abschnitt (31a) gegenüberliegt und mittels des zweiten Abschnitts (31b) mit dem ersten Abschnitt (31a) verbunden ist, und
**dass** die erste Vielzahl von Sensoren (41) an dem ersten Abschnitt (31a) angeordnet ist, um das Zielobjekt in der ersten Erfassungszone (Z1) zu erfassen.

10. Maschine (1) nach dem vorhergehenden Anspruch, sofern dieser von einem der Ansprüche 2 bis 6 abhängig ist, **dadurch gekennzeichnet, dass** die zweite Vielzahl von Sensoren (42) an dem zweiten Abschnitt (31b) der Bearbeitungseinheit (3) angeordnet ist, um das Zielobjekt in der zweiten Erfassungszone (Z2) zu erfassen.

11. Maschine (1) nach Anspruch 9 und/oder 10, **dadurch gekennzeichnet, dass** sie eine dritte Vielzahl von Sensoren (43) umfasst, die an dem dritten Abschnitt (31c) angeordnet ist, um den Abstand des Zielobjekts von der beweglichen Bearbeitungseinheit (3) in einer Zone (Z3) zu erfassen, die an die Auflagebasis (2) angrenzt und auf einer Seite liegt, die der von der ersten Vielzahl von Sensoren (41) überwachten Zone (Z1) gegenüberliegt, wobei die dritte Vielzahl von Sensoren (43) die Abstandswerte an die logische Steuereinheit (C) sendet.

12. Maschine (1) nach einem der vorhergehenden Ansprüche, **dadurch gekennzeichnet, dass** das Erfassungssystem (4) Ultraschallsensoren umfasst.

13. Betriebsverfahren einer Maschine (1) zur Bearbeitung von Werkstücken (P) aus Holz, Kunststoff, Metall, Glasfaser, Glas oder dergleichen, von der Art, die eine Auflagebasis (2) für die zu bearbeitenden Werkstücke (P) und eine bewegliche Bearbeitungseinheit (3) umfasst, die entlang der Auflagebasis (2) mit einer Verschiebegeschwindigkeit bewegbar ist, wobei das Verfahren umfasst
Bereitstellen einer logischen Steuereinheit (C), in der vorbestimmte Schwellenwertparameter für den Abstand eines Zielobjekts von der beweglichen Bearbeitungseinheit (3) in einer ersten vorbestimmten Erfassungszone (Z1), die an die Auflagebasis (2) angrenzt, gespeichert werden können,
**dadurch gekennzeichnet, dass** es umfasst Bereitstellen eines Erfassungssystems (4), das eine erste Vielzahl von Sensoren (41) umfasst, mit der beweglichen Bearbeitungseinheit (3) gekoppelt und mit der logischen Steuereinheit (C) verbindbar ist, um Abstandswerte des Zielobjekts von der Bearbeitungseinheit (3) in der ersten vorbestimmten Erfassungszone (Z1) zu erfassen und die Abstandswerte an die logische Steuereinheit (C) zu senden, Durchführen eines Vergleichs zwischen den von dem Erfassungssystem (4) empfangenen Abstandswerten und den vorbestimmten Schwellenwertparametern mittels der logischen Steuereinheit (C), und
Bestimmen, ob die bewegliche Bearbeitungseinheit (3) verlangsamt oder gestoppt werden soll, auf Grundlage des im vorhergehenden Schritt durchgeführten Vergleichs und auf Grundlage der Verschiebegeschwindigkeit der beweglichen Bearbeitungseinheit (3),
wobei
die Erfassung der Abstandswerte durch die erste Vielzahl von Sensoren (41) für jeden Sensor der ersten Vielzahl von Sensoren (41) in einem synchronen Modus erfolgt, wobei jeder Sensor der ersten Vielzahl von Sensoren (41) das Echo eines benachbarten Sensors empfängt, um die Erfassung durch das Erfassungssystem (4) zu verbessern.

## Revendications

1. Machine (1) destinée à l'usinage de pièces d'usinage (P) en bois, en plastique, en métal, en fibre de verre, en verre ou analogue, comprenant
une base de support (2) desdites pièces d'usinage (P) à usiner,
une unité d'usinage mobile (3) pouvant se déplacer le long de ladite base de support (2), un système de détection (4), couplé à ladite unité d'usinage mobile (3), apte à détecter la présence d'une cible dans une première zone de détection prédéterminée (Z1) contiguë à ladite base de support (2),
une unité de commande logique (C) pouvant être connectée audit système de détection (4),
dans laquelle des paramètres de seuil prédéterminés de distances de sécurité de la cible par rapport à ladite unité d'usinage mobile (3) dans ladite zone de détection prédéterminée (Z1) sont stockés dans ladite unité de commande logique (C),
**caractérisée en ce que** ledit système de détection (4) comprend une première pluralité de capteurs (41) qui détectent la distance de la cible par rapport à ladite unité d'usinage mobile (3) dans ladite zone de détection prédéterminée (Z1) et transmettent lesdites valeurs de distance à ladite unité de commande logique (C),
**en ce que** ladite unité de commande logique (C) est configurée pour déterminer s'il convient de ralentir ou d'arrêter le déplacement de ladite unité d'usinage mobile (3), après une comparaison entre lesdites valeurs de distance reçues de ladite première pluralité de capteurs (41) et lesdits paramètres de seuil prédéterminés, et
**en ce que** la détection desdites valeurs de distance par ladite première pluralité de capteurs (41) s'effectue de manière synchrone pour chaque capteur de ladite première pluralité de capteurs (41), chaque capteur de ladite première pluralité de capteurs (41) recevant l'écho d'un capteur voisin, de manière à augmenter la capacité de détection dudit système de détection (4).

2. Machine (1) selon la revendication précédente, **caractérisée en ce que** ledit système de détection (4) comprend une deuxième pluralité de capteurs (42) qui détectent la distance de la cible par rapport à ladite unité d'usinage mobile (3) dans une deuxième zone de détection prédéterminée (Z2) située au-dessus de ladite base de support (2) et transmettent lesdites valeurs de distance à ladite unité de commande logique (C).

3. Machine (1) selon la revendication précédente, **caractérisée en ce que** la détection desdites valeurs de distance par ladite deuxième pluralité de capteurs (42) s'effectue de manière synchrone pour chaque capteur de ladite deuxième pluralité de capteurs (42).

4. Machine (1) selon l'une quelconque des revendications précédentes, **caractérisée en ce que** ladite première pluralité de capteurs (41) comprend au moins un premier capteur (41a), un deuxième capteur (41c) et un troisième capteur (41d) non alignés les uns avec les autres.

5. Machine (1) selon l'une quelconque des revendications 1 à 3, **caractérisée en ce que** ladite première pluralité de capteurs (41) comprend au moins un premier capteur (41a), un deuxième capteur (41b), un troisième capteur (41c), un quatrième capteur (41d), un cinquième capteur (41e) et un sixième capteur (41f), entre lesquels au moins trois capteurs ne sont pas alignés les uns avec les autres,
**en ce que** lesdits premier capteur (41a), deuxième capteur (41b) et troisième capteur (41c) sont alignés les uns avec les autres le long d'une droite orthogonale à l'axe de coulissement de ladite unité d'usinage mobile (3), et
**en ce que** lesdits quatrième capteur (41d), cinquième capteur (41e) et sixième capteur (41f) sont alignés les uns avec les autres le long d'une droite orthogonale à l'axe de coulissement de ladite unité d'usinage mobile (3), parallèle à la droite d'alignement desdits premier capteur (41a), deuxième capteur (41b) et troisième capteur (41c).

6. Machine (1) selon l'une quelconque des revendications 2 à 5, **caractérisée en ce que** ladite deuxième pluralité de capteurs (42) comprend au moins un premier capteur (42a) et un deuxième capteur (42b) alignés l'un avec l'autre le long d'une droite orthogonale à l'axe de coulissement de ladite unité d'usinage (3).

7. Machine (1) selon l'une quelconque des revendications précédentes, **caractérisée en ce que** ladite unité d'usinage (3) présente une forme en L inversé comprenant une première portion (31a), disposée latéralement par rapport à ladite base de support (2), et une deuxième portion (31b), reliée à ladite première portion (31a) et disposée au-dessus de ladite base de support (2), et
**en ce que** ladite première pluralité de capteurs (41) est disposée sur ladite première portion (31a) pour détecter la cible dans ladite première zone de détection (Z1).

8. Machine (1) selon la revendication précédente, lorsqu'elle dépend des revendications 2 à 6, **caractérisée en ce que** ladite deuxième pluralité de capteurs (42) est disposée sur ladite deuxième portion (31b) de ladite unité d'usinage (3) pour détecter la cible dans ladite deuxième zone de détection (Z2).

9. Machine (1) selon l'une quelconque des revendications 1 à 6, **caractérisée en ce que** ladite unité d'usinage (3) présente une forme en U inversé comprenant une première portion (31a), disposée latéralement par rapport à ladite base de support (2), une deuxième portion (31b), disposée au-dessus de ladite base de support (2), et une troisième portion (31e), opposée à ladite première portion (31a) par rapport à ladite base de support (2), reliée à ladite première portion (31a) au moyen de ladite deuxième portion (31b), et
**en ce que** ladite première pluralité de capteurs (41) est disposée sur ladite première portion (31a) pour détecter la cible dans ladite première zone de détection (Z1).

10. Machine (1) selon la revendication précédente, lorsqu'elle dépend de l'une des revendications 2 à 6, **caractérisée en ce que** ladite deuxième pluralité de capteurs (42) est disposée sur ladite deuxième portion (31b) de ladite unité d'usinage (3) pour détecter la cible dans ladite deuxième zone de détection (Z2).

11. Machine (1) selon l'une quelconque des revendications 9 et/ou 10, **caractérisée en ce qu'**elle comprend une troisième pluralité de capteurs (43), disposée sur ladite troisième portion (31e), pour détecter la distance de la cible par rapport à ladite unité d'usinage mobile (3) dans une zone (Z3) contiguë à ladite base de support (2), d'un côté opposé à ladite zone (Z1) surveillée par ladite première pluralité de capteurs (41), ladite troisième pluralité de capteurs (43) transmettant lesdites valeurs de distance à ladite unité de commande logique (C).

12. Machine (1) selon l'une quelconque des revendications précédentes, **caractérisée en ce que** ledit système de détection (4) comprend des capteurs à ultrasons.

13. Procédé de fonctionnement d'une machine (1) destinée à l'usinage de pièces d'usinage (P) en bois, en plastique, en métal, en fibre de verre, en verre ou analogue, du type comprenant une base de support (2) desdites pièces d'usinage (P) à usiner, une unité d'usinage mobile (3) pouvant se déplacer le long de ladite base de support (2) selon une vitesse de coulissement, ledit procédé comprenant mettre à disposition une unité de commande logique (C) dans laquelle peuvent être stockés des paramètres de seuil prédéterminés de distance d'une cible par rapport à ladite unité d'usinage mobile (3) dans une première zone de détection prédéterminée (Z1), contiguë à ladite base de support (2),
**caractérisé par** la mise à disposition d'un système de détection (4) comprenant une première pluralité de capteurs (41), couplé à ladite unité d'usinage mobile (3) et pouvant être connecté à ladite unité de commande logique (C), pour détecter des valeurs de distance de la cible par rapport à ladite unité d'usinage (3) dans ladite première zone de détection prédéterminée (Z1), et pour transmettre lesdites valeurs de distance à ladite unité de commande logique (C),
réaliser, au moyen de ladite unité de commande logique (C), une comparaison entre lesdites valeurs de distance reçues dudit système de détection (4) et lesdits paramètres de seuil prédéterminés, et déterminer la nécessité de ralentir ou d'arrêter ladite unité d'usinage mobile (3), sur la base de la comparaison effectuée à l'étape précédente et sur la base de la vitesse de coulissement de ladite unité d'usinage mobile (3),
dans lequel
la détection desdites valeurs de distance par ladite première pluralité de capteurs (41) s'effectue de manière synchrone pour chaque capteur de ladite première pluralité de capteurs (41), chaque capteur de ladite première pluralité de capteurs (41) recevant l'écho d'un capteur voisin, de manière à augmenter le détection dudit système de détection (4).
